Europäisches Patentamt

European Patent Office

Office européen des brevets

(19)

(11) Numéro de publication : **0 407 519 B1**

(12) **FASCICULE DE BREVET EUROPEEN**

(45) Date de publication du fascicule du brevet :
21.04.93 Bulletin 93/16

(51) Int. Cl.⁵ : **G01J 3/453**

(21) Numéro de dépôt : **90900901.1**

(22) Date de dépôt : **22.12.89**

(86) Numéro de dépôt international :
**PCT/FR89/00677**

(87) Numéro de publication internationale :
**WO 90/07698 12.07.90 Gazette 90/16**

(54) **DISPOSITIF INTERFEROMETRIQUE POUR SPECTRO-IMAGEUR PAR TRANSFORMEE DE FOURIER MULTIPLEX A DEFILEMENT, ET SPECTRO-IMAGEUR LE COMPORTANT.**

(30) Priorité : **28.12.88 FR 8817328**

(43) Date de publication de la demande :
**16.01.91 Bulletin 91/03**

(45) Mention de la délivrance du brevet :
**21.04.93 Bulletin 93/16**

(84) Etats contractants désignés :
**AT BE CH DE ES FR GB IT LI LU NL SE**

(56) Documents cités :
**EP-A- 0 068 922
US-A- 3 684 379
US-A- 4 523 846
APPLIED OPTICS, volume 24, Nr. 24, 15
December 1985, (New York, US), page 4394 :
"Fourier Transform Infrared Spectrometer"**

(73) Titulaire : **AEROSPATIALE Société Nationale Industrielle
37, Boulevard de Montmorency
F-75781 Paris Cédex 16 (FR)**

(72) Inventeur : **CERUTTI-MAORI, Guy
50, boulevard du Soleil
F-06150 Cannes-la-Bocca (FR)**
Inventeur : **SIMEONI, Denis
1, rue Félix-Faure
F-06400 Cannes (FR)**

(74) Mandataire : **Rinuy, Santarelli
14, avenue de la Grande Armée
F-75017 Paris (FR)**

## Description

L'invention concerne un dispositif interférométrique adapté à être intégré dans un système de formation d'image par spectrométrie par transformée de FOURIER multiplexe (on parle aussi de "spectro-imageur").

Un tel spectro-imageur est entraîné dans un mouvement de défilement parallèlement à une zone-objet à scruter, une zone de sol par exemple.

Le principe de cette spectro-imagerie par transformée de FOURIER multiplexe est connu en soi, notamment d'après le document EP-0.068.922 qui enseigne comment utiliser le défilement relatif de la surface terrestre par rapport à un avion ou à un satellite afin de réaliser par interférences lumineuses une analyse spectrale d'un ensemble de zones élémentaires de sol contigües. Cela évite tout déplacement relatif entre des pièces optiques du dispositif interférométrique. On utilise les contenus successifs d'un réseau ou mosaïque de détecteurs CCD sur lequel se forment les franges.

Ce document décrit, à titre préféré, un dispositif interférométrique constitué par un polariscope de SAVART.

En fait il apparaît avantageux, notamment pour des raisons de flux lumineux reçu, de chercher à utiliser plutôt un interféromètre de type MICHELSON comportant une lame semi-transparente disposée à 45° par rapport à des faisceaux d'entrée et de sortie. Le faisceau d'entrée est dissocié par la lame semi-transparente en deux demi-faisceaux entre lesquels on introduit une différence de marche : après recombinaison par la lame d'une partie de chacun des demi-faisceaux on obtient un faisceau de sortie permettant la constitution d'un interférogramme. En raison de l'apparition de deux demi-faisceaux, on parle aussi d'"interféromètre à deux ondes".

L'invention a ainsi pour objet d'améliorer le système spectro-imageur du document EP-0.068.922 grâce à la mise au point d'un dispositif interférométrique approprié du type à deux ondes. Elle vise notamment :

- à augmenter le gain en énergie utile et donc augmenter la résolution radiométrique ;
- à améliorer le contraste des franges et donc augmenter la résolution spectrale ;
- à rester dans un encombrement aussi faible que possible, aussi bien pour le dispositif interférométrique que pour l'ensemble du spectro-imageur, et réduire autant que possible le poids correspondant ;
- à rendre la différence de marche indépendante de l'angle d'ouverture du faisceau incident ;
- à conserver l'inclinaison du rayon moyen de l'onde divergente ;
- à superposer de manière très précise les images géométriques.

On connaît déjà un dispositif interférométrique de type MICHELSON (donc à deux ondes) susceptible d'être utilisé dans un spectro-imageur du type décrit dans le document EP-0.068.922. Il s'agit du dispositif décrit par GIRARD dans le brevet US-3.684.379. Ce dispositif diffère d'un interféromètre classique de MICHELSON par le fait qu'il est formé d'un prisme dont la section, au lieu d'être constante, varie lorsque l'on se déplace parallèlement à l'arête du prisme où se rejoignent deux faces d'entrée/sortie de ce prisme (ainsi que la lame semi-transparente située dans un plan bissecteur entre ces faces) : cette variation de section résulte de l'addition, le long d'une face parallèle à l'une des faces d'entrée/sortie, d'une lame prismatique dont l'épaisseur varie parallèlement à ladite arête.

En fait un tel interféromètre de GIRARD a tout d'abord l'inconvénient de n'utiliser que la moitié de l'énergie incidente, l'autre moitié étant émise en sens inverse du faisceau incident.

D'autre part, les réflexions parasites dues au passage de l'onde au travers des divers dioptres sont émises en partie sur la voie de sortie de l'interféromètre. Ces réflexions parasites créent une lumière parasite dans le plan de la mosaïque de détecteurs, ce qui diminue le contraste des franges de l'interféromètre.

Enfin, le principe même de cet interféromètre suppose que l'image soit focalisée dans le plan des miroirs de l'interféromètre : dans ce cas diverses sources de pollution (poussières, crasses.....) ou défauts peuvent apparaître dans ces plans focaux matériels et provoquer des pertes de contraste importantes des franges d'interférences.

De plus, cette exigence de focalisation impose l'existence d'une optique de sortie (aussi appelée optique de transport) pour conjuguer le plan des miroirs de l'interféromètre et le plan de la mosaïque.

L'invention a pour objet de pallier certaines au moins de ces limitations.

Elle propose à cet effet un dispositif interférométrique pour imagerie par spectrométrie par transformée de FOURIER multiplexe, destiné à être mis en défilement relatif par rapport à une zone objet selon une direction de défilement constituant pour ce dispositif interférométrique une direction de référence, comportant un bloc prismatique en matériau transparent présentant de première et seconde faces d'entrée/sortie perpendiculaires l'une à l'autre et se rejoignant en une arête du bloc, une lame semi-transparente dans ce bloc, disposée à 45° par rapport à ces première et seconde faces d'entrée/sortie et passant par ladite arête du bloc, et de première et seconde surfaces réfléchissantes disposées respectivement en regard de ces première et seconde faces d'entrée/sortie au travers de la lame semi transparente, caractérisé en ce que :

- à chaque face d'entrée/sortie étant associé un plan de référence perpendiculaire à cette face d'entrée/sortie et parallèle à ladite direction de référence,

- au moins une surface inclinée de séparation dioptrique est prévue entre l'une des faces d'entrée/sortie et la surface réfléchissante associée, faisant dans le plan de référence associé un angle de dioptre non nul par rapport à cette face d'entrée/sortie,
- les première et seconde surfaces réfléchissantes sont de configurations et d'orientations fixes par rapport au bloc et ont chacune la forme d'un toit dont la concavité est en regard de la face d'entrée/sortie associée et qui admet un plan bissecteur parallèle à ladite arête du bloc et perpendiculaire à ladite face d'entrée/sortie associée, ces surfaces en toit présentant dans les plans de référence, par rapport aux faces d'entrée/sortie associées, des angles d'inclinaison dont l'écart est non nul.

On appréciera que de tels miroirs en toit, ou miroirs diédriques, sont connus en soi, y compris en combinaison avec une lame semi-transparente d'un interféromètre de MICHELSON, d'après les documents US-4.190.366, US-4.183.669 et US-4.165.938. Il faut toutefois noter que ces documents concernent un dispositif de MICHELSON classique utilisé pour l'analyse spectrale d'un objet fixe ; les divers miroirs en toit sont tous à angle droit et ont des arêtes de dièdre parallèles aux faces d'entrée/sortie et à la lame semi-transparente. La différence de marche est provoquée par une translation d'une lame prismatique triangulaire, sans intervention directe de ces miroirs sur l'amplitude de la différence de marche. Ces documents font intervenir un objectif collecteur de flux au foyer duquel est placé l'objet, et un objectif de reprise qui forme l'image dans le plan des détecteurs. Ces documents concernent en fait une application simple, très différente de la spectro-imagerie proposée par le document EP-0.068.922, et ne sauraient être mis en oeuvre en spectro-imagerie sans des adaptations substantielles non évidentes.

On appréciera que selon l'invention :

1 - l'énergie totale concentrée par l'objectif d'entrée est utilisable ;

2 - les réflexions parasites dues aux dioptres rencontrés par l'onde sont réémises vers les voies d'entrée et non sur les voies de sortie : elles n'affectent pas la qualité des franges d'interférences ;

3 - l'image formée par l'objectif d'entrée peut être focalisée dans un plan arbitraire. En fait, on peut montrer que la baisse de contraste des franges lors d'une défocalisation du plan image par rapport aux miroirs est due à une séparation des images virtuelles des deux voies, ce qui peut être compensé par un déplacement transversal de l'un des miroirs en toit. Pour toute position donnée du plan focal on peut donc trouver un déplacement de l'un des miroirs en toit qui restitue le contraste des franges, d'où les avantages suivants :

- le plan image n'est pas situé dans le plan des miroirs ce qui diminue les pertes du contraste des franges en cas de pollution des miroirs ;
- dans certains cas, si le tirage de l'objectif formant l'image est suffisant, l'image peut être formée à l'extérieur de l'interféromètre et il n'est donc plus nécessaire de prévoir un objectif de reprise ; cela favorise une miniaturisation de l'ensemble (interféromètre plus détecteurs) : un cube de quelques centimètres de côtés (environ 5 cm) suffit là où il fallait jusqu'alors, un cube de côté quatre à cinq fois plus important.

Selon des dispositions préférées de l'invention :

- le dispositif interférométrique présente entre chacune des faces d'entrée/sortie et la surface réfléchissante associée, des surfaces de séparation dioptrique dont les angles de dioptre, mesurés dans les plans de références, déterminent un écart angulaire de dioptre tel que l'écart d'inclinaison soit par rapport à cet écart angulaire de dioptre dans un rapport prédéterminé défini en fonction des indices de réfraction des milieux séparés par ces surfaces de séparation dioptrique.
- cet écart d'inclinaison est, par rapport à cet angle de dioptre, dans un rapport prédéterminé défini en fonction des indices de réfraction des milieux séparés par ces surfaces de séparation dioptrique.
- - $n$ étant l'indice de réfraction du matériau constitutif du bloc, le rapport prédéterminé vaut $(n-1)/n$.
- il comporte entre l'autre des faces d'entrée/sortie, et la surface réfléchissante associée, une surface plane de séparation dioptrique parallèle à cette face d'entrée/sortie, et l'une des surfaces réfléchissantes a une arête de toit parallèle à ladite arête du bloc et a une ouverture de 90°.
- cette surface parallèle de séparation et cette surface réfléchissante correspondent à une même face d'entrée/sortie.

Suivant un premier mode de réalisation :

- ladite direction de référence étant perpendiculaire à ladite arête du bloc, ladite surface inclinée de séparation dioptrique est un dièdre formé de deux surfaces planes inclinées dudit angle de dioptre par rapport à la face d'entrée/sortie associée et dont l'intersection constitue une arête de dièdre parallèle à ladite arête de bloc et la surface réfléchissante en toit associée a une arête de toit parallèle auxdites arêtes de dièdre et de bloc et a comme angle d'ouverture ledit angle d'inclinaison,
- l'une au moins des surfaces réfléchissantes est avantageusement réglable en position selon une direction transversale de réglage perpendiculaire à ladite arête du bloc.

Suivant un second mode de réalisation, ladite direction de référence étant parallèle à l'arête de bloc, ladite surface inclinée de séparation dioptrique est plane et est inclinée dudit angle de dioptre par rapport à l'arête de bloc et l'arête de dièdre de la surface réfléchissante associée est inclinée dudit angle d'inclinaison par rapport à l'arête du bloc.

L'invention propose également un spectroimageur équipé de ce dispositif interférométrique de préférence muni d'une mosaïque de détecteurs sur chacun de ses voies de sortie.

Des objets, caractéristiques et avantages de l'invention ressortent de la description qui suit, donnée à titre d'exemple non limitatif, en regard des dessins annexés sur lesquels :
- la figure 1 est une vue schématique en perspective d'un système d'imagerie par spectrométrie par transformée de FOURIER multiplexe par défilement selon une direction D, comportant un dispositif interférométrique conforme à l'invention ;
- la figure 2 est une vue en perspective de ce dispositif interférométrique, à plus grande échelle ;
- la figure 3 est une vue de face selon la flèche III de la ligne 2 ;
- la figure 4 en est une vue latérale selon la flèche IV de la figure 2 ;
- la figure 5 est une vue schématique d'une variante de réalisation simplifiée du système de la figure 1 ;
- la figure 6 est une vue schématique en perspective d'un autre système d'imagerie correspondant à une autre direction D' de défilement, perpendiculaire à D ;
- la figure 7 est une vue en perspective du dispositif interférométrique de cet autre système d'imagerie, selon un autre mode de réalisation de l'invention ;
- la figure 8 en est une vue de face selon la flèche VIII de la figure 7 ;
- la figure 9 en est une vue latérale selon la flèche IX de la figure 7 ; et
- la figure 10 en est une vue de dessous selon la flèche X de la figure 7.

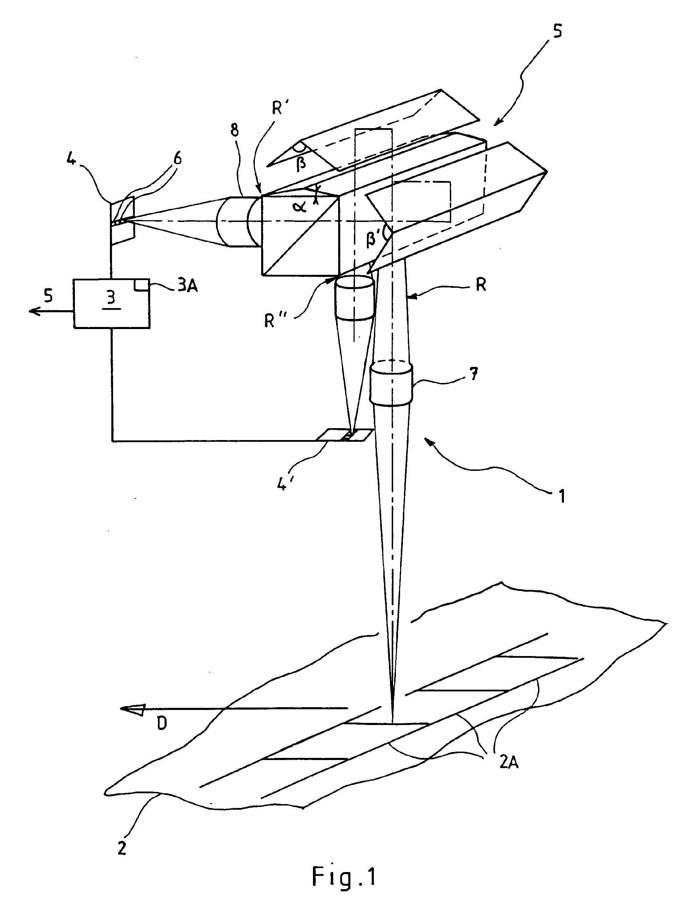

La figure 1 représente un système 1 d'imagerie par spectrométrie par transformée de FOURIER multiplexe adapté à se déplacer parallèlement à une zone de sol 2, selon une direction de défilement (schématisée par la flèche D) pour faire une image spectrale de cette zone de sol 2. Le dispositif 1 est par exemple embarqué sur un avion, voire sur un satellite (non représenté).

Cette image spectrale est élaborée par une unité de traitement 3, dotée d'une mémoire équipée d'une horloge 3A, à partir des images successives formées au cours du temps sur un dispositif de détection 4 par un dispositif interférométrique 5 de type MICHELSON (à deux ondes) muni d'une optique d'entrée 7 et d'une optique de sortie 8, et auquel parviennent des ondes lumineuses émises par réflexion par la zone de sol 2.

Le système de détection 4 est formé d'un réseau (ou mosaïque) de détecteurs 6 à transfert de champ de type CCD (abréviation de l'expression anglaise "charge-coupled device") qui reçoivent chacun un faisceau représentatif d'une zone élémentaire 2A de la zone de sol 2. A un instant donné, les divers détecteurs 6 reçoivent respectivement des faisceaux émanant respectivement des diverses zones élémentaires 2A et contiennent ainsi un élément d'image de cette zone de sol 2, appelé pixel (formé par les premières syllabes des mots anglais "picture element"). Pour.des raisons de lisibilité on n'a représenté, respectivement, sur la zone 2 et sur le système de détection 4, que des bandes de zones 2A, et de détecteurs 6, respectivement, qui se correspondent l'une à l'autre, et sont orientées transversalement à la direction D.

Chaque pixel est échantillonné au cours du temps, avec une période d'échantillonnage constante choisie en fonction de la vitesse de défilement de manière à ce que les informations reçues par un détecteur 6 à des instants successifs correspondent à des zones élémentaires contigües sur le sol parallèlement à D.

En fait la zone de sol 2 explorée par le système de détection 4 se déplace à chaque instant d'une distance égale au côté d'une zone élémentaire 2A, et c'est la prise en compte des pixels reçus successivement au cours du temps par une ligne de détecteurs en provenance d'une même zone élémentaire fixe du sol et stockés dans la mémoire 3A qui permet à l'unité de traitement 3 d'élaborer une image spectrale S de cette zone élémentaire fixe.

Le dispositif interférométrique 5 est conçu en sorte que le faisceau reçu par chaque détecteur 6 résulte de l'addition de deux faisceaux obtenus par division du faisceau émis par une zone élémentaire de sol 2A et entre lesquels ce dispositif interférométrique introduit une différence de marche qui varie entre des zones élémentaires de sol alignées parallèlement au sens de défilement D. De la sorte, à chaque zone élémentaire de sol correspondent des faisceaux successifs, reçus par des détecteurs contigüs distincts et élaborés avec des différences de marche différentes. C'est par identification des pixels successifs correspondant à une zone élémentaire donnée 2A que l'unité de traitement 3 élabore l'analyse spectrale de cette zone.

Le principe d'élaboration d'une telle image spectrale à partie de l'identification de ces pixels successifs est connu en soi et ne sera pas ici explicité plus avant. Pour plus de détails, on pourra se référer au document EP-0.068.922 précité.

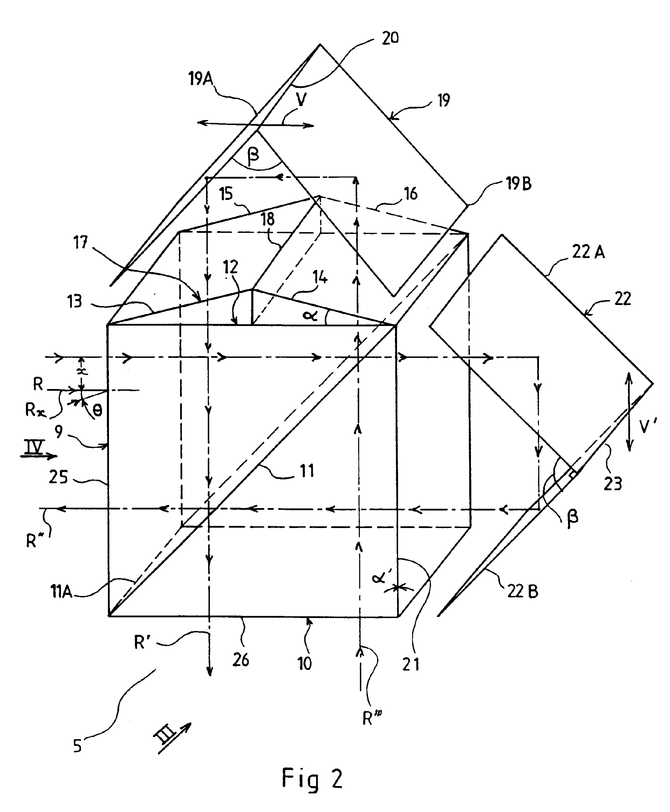

La structure du dispositif interférométrique 5 est détaillée aux figures 2 à 4.

Ce dispositif interférométrique 5 est composé de deux prismes identiques transparents 9 et 10, de même indice de réfraction, en pratique en verre, de section triangulaire rectangle accolées par leurs faces de plus grande aire en sorte de former conjointement un parallélépipède rectangle de section carrée. Ces faces de plus grande aire sont traitées d'une quelconque manière connue appropriée en sorte de constituer conjointement une lame semi-transparente 11. Ces deux faces sont par exemple revêtues d'une couche de diélectrique et collées ensemble par adhérence moléculaire.

Sur l'une 12 des faces latérales de l'un des prismes, ici le prisme 9, sont collées deux lames prismatiques transparentes 13 et 14, en pratique en verre, ayant une section triangulaire rectangle (ou trapézoïdale rectangle) et accolées l'une à l'autre par des faces de petite section en sorte que leurs faces de plus grande aire 15 et 16 définissent conjointement une surface de séparation 17 diédrique en accent circonflexe aplati faisant dont les pans 15 et 16 font un angle α avec la face 12 et dont l'arête de dièdre 18 est parallèle à la lame semi-transparente 11. En pratique, ces lames prismatiques sont identiques.

Comme cette surface 17 sépare deux milieux d'indices de réfraction différents, elle constitue une surface de séparation dioptrique dont α constitue un angle de dioptre.

Ces lames 13 et 14 sont destinées à assurer une compensation de champ.

De manière préférée les prismes 9 et 10 et les lames 13 et 14 sont réalisées en des verres identiques.

Selon une variante non représentée, le prisme 9 et les lames 13 et 14 sont remplacés par une même pièce.

En regard de cette surface de séparation 17 en accent circonflexe aplati, est disposée une surface réfléchissante (ou miroir) en toit 19 formée de deux pans réfléchissants 19A et 19B faisant entre eux un angle β. Ces surfaces réfléchissantes se rejoignent en une arête de dièdre 20 parallèle à la lame semitransparente 11. Le plan bissecteur de ce miroir en toit est parallèle au plan bissecteur de la surface 17 en accent circonflexe et est en principe confondu avec celui-ci.

En regard de la face 21 de l'autre prisme 10 (qui est à angle droit avec la face 12), est disposée une autre surface réfléchissante (ou miroir) en toit 22 formée de deux pans réfléchissants 22A et 22B faisant entre eux un angle β' (ici un angle droit) et qui se rejoignent en une arête de dièdre 23 parallèle à la lame semi-transparente 11. Le plan bissecteur de ce miroir en toit 22 est en principe confondu avec un plan perpendiculaire à la face 21 en une ligne médiane de celle-ci. Par analogie avec ce qui précède à propos de la surface 17, on peut écrire que la face 21 est une surface de séparation d'angle de dioptre α' nul.

Ces miroirs en toit 12 et 22 sont maintenus fixes par rapport au bloc prismatique constitué par les éléments 9, 10, 13 et 14 par tout moyen approprié non représenté. En variante non représentée, le prisme 21 se prolonge jusqu'à la surface réfléchissante 22 et il n'y a plus réellement de dioptre ; dans ce cas, on raisonnera comme avec un angle α' nul, comme précédemment.

Les faces perpendiculaires 25 et 26 respectivement opposées aux faces 21 et 12 constituent des faces orthogonales d'entrée/sortie pour les faisceaux lumineux ; la lame 11 est située dans le plan bissecteur de ces faces et passe par leur arête commune 11A.

Un débattement latéral de l'une ou l'autre des surfaces réfléchissantes 19 et 22 est avantageusement rendu possible parallèlement à la face 12 (double flèche V) ou parallèlement à la face 21 (double flèche V'), pour rattraper une éventuelle défocalisation involontaire des optiques d'éntrée 7 et de sortie 8, ou au contraire pour effectuer volontairement un déplacement de l'image formée par le faisceau passant dans cette voie (réfléchi par la surface réfléchissante considérée) afin que, dans le plan du dispositif de détection 4, les deux images formées selon les deux voies soient en coïncidence.

Si $n$ est l'indice de réfraction du matériau constitutif des prismes 9 et 10 et des lames prismatiques 13 et 14, les écarts angulaires α-α' et β-β' sont reliés par la relation :

$$\beta - \beta' = \frac{n-1}{n}(\alpha - \alpha')$$

Cet angle α est de préférence choisi entre $10^{-4}$rd et $10^{-2}$rd suivant l'application visée ; en lumière visible il est par exemple choisi égal à $1,5.10^{-3}$rd.

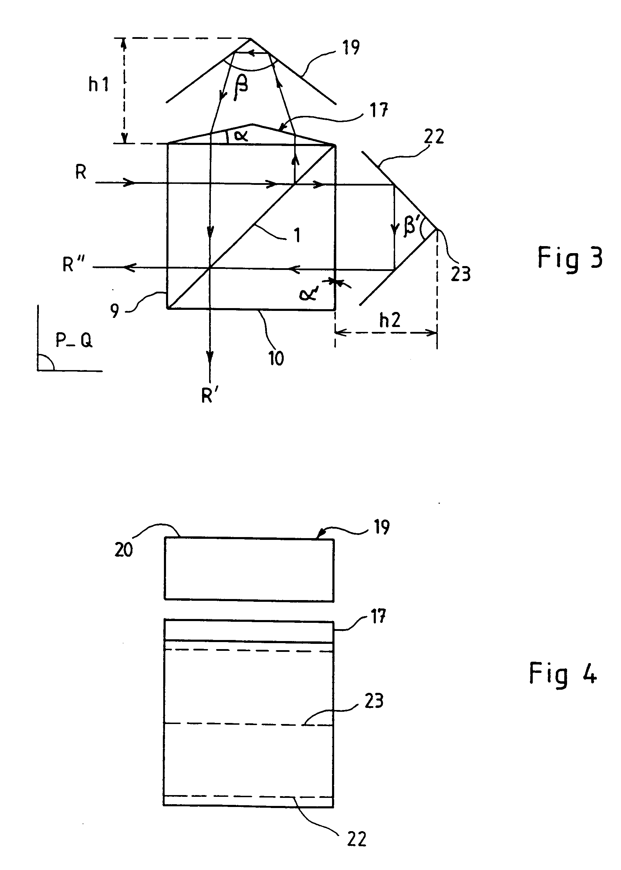

Ainsi qu'il ressort à la figure 3 un faisceau incident dont le rayon moyen est R, interceptant la face 25 pénètre dans le bloc prismatique 9-10-13-14 jusqu'à intercepter la lame 11. Le faisceau se divise en deux demi-faisceaux (selon deux voies) qui sont respectivement transmis jusqu'au miroir en toit 22, et réfléchi vers le miroir en toit 19. Chacun de ces demifaisceaux, après double réflexion sur le miroir 19 ou 22 correspondant, pénètre à nouveau dans le bloc 9-10-13-14, en sens inverse (donc après réflexions-réfractions sur un angle de 180°), jusqu'à intercepter à nouveau la lame semi-transparente 11 où il se divise en deux quarts de faisceaux respectivement réfléchi et transmis. Par recombinaison deux par deux de ces quarts de faisceau on obtient deux faisceaux de sortie de rayon moyen R' ou R'', respectivement.

Les arêtes 20 et 23 sont situées par rapport aux faces 12 et 21 à des distances h1 et h2 telles que, pour le rayon R normal à la face 25, les différences de marche entre les quarts de faisceau constitutifs des faisceaux R' et R" soient nulles.

Toutefois, pour tout autre faisceau de rayon moyen Rx normal à la face 25, interceptant le bloc 9-10-13-14 avec un écart $\underline{x}$ par rapport à R, perpendiculairement à l'arête 11A donc dans un plan perpendiculaire à la face 25 et parallèle à D, les deux demi-faisceaux (deux voies) respectivement transmis et réfléchi par la lame 11 présentent une différence de marche proportionnelle à $\underline{x}$. Si de plus la relation précitée entre (α-α') et (β-β') est respectée, cette différence de marche est pratiquement indépendante de l'angle d'ouverture des rayons composant le faisceau élémentaire dont Rx est le rayon moyen. En effet, la relation précitée correspond à l'annulation du terme en $\Theta^2$ du développement limité de l'expression (aisée à établir pour l'homme de métier) donnant la différence de marche, pour une valueur de $\underline{x}$ donnée, en fonction de l'angle d'inclinaison $\Theta$ d'un rayon incident : cette relation traduit une condition de compensation de champ optique.

De plus, les deux quarts de faisceau formant respectivement le faisceau de sortie par le rayon moyen R'x, ou R"x, sont portés par des rayons moyens non parallèles qui font entre eux un angle proportionnel à la différence de marche. Suivant le réglage selon V ou V' des surfaces réfléchissantes 19 ou 22, on peut modifier le point de convergence desdits rayons moyens des quarts de faisceau précités, et donc modifier la position du plan de coïncidence des deux images associées à ces quarts de faisceau sans altérer la qualité des franges.

On appréciera que les miroirs 19 et 22 permettent de découpler les faisceaux d'entrée et de sortie R et R" et qu'il est donc possible de recueillir non seulement le faisceau R' comme dans les solutions connues, mais aussi le faisceau R" au travers (ou non) d'une optique de sortie 8' , grâce au dispositif de détection 4' représenté à la figure 1, l'unité de traitement 3 peut ainsi élaborer l'image spectrale de la zone de sol 2 à partir de la totalité de l'énergie reçue par le dispositif interférométrique 5. R suit une voie d'entrée tandis que R' et R" suivent des voies de sortie. En fait les faces 25 et 26 sont interchangeables et on dispose de deux voies d'entrées possibles R et R‴ découplées des voies de sortie.

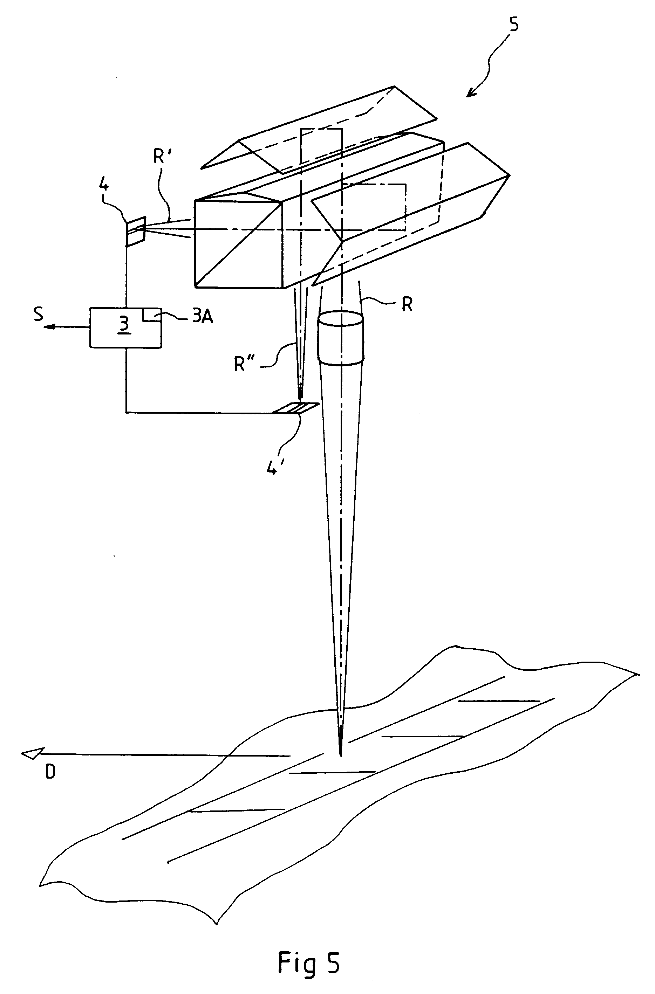

La figure 5 est une variante de la figure 1 dans laquelle les optiques de sortie 8 et 8' ont été supprimées, tirant parti de la possibilité précitée de régler le plan de convergence des quarts de faisceau. Il en résulte un gain de place sensible.

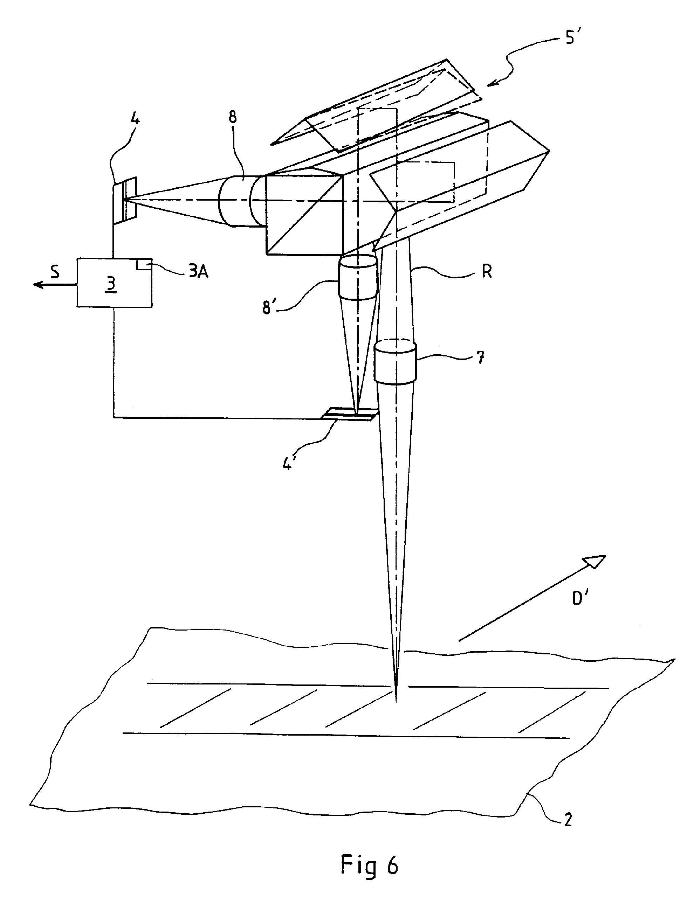

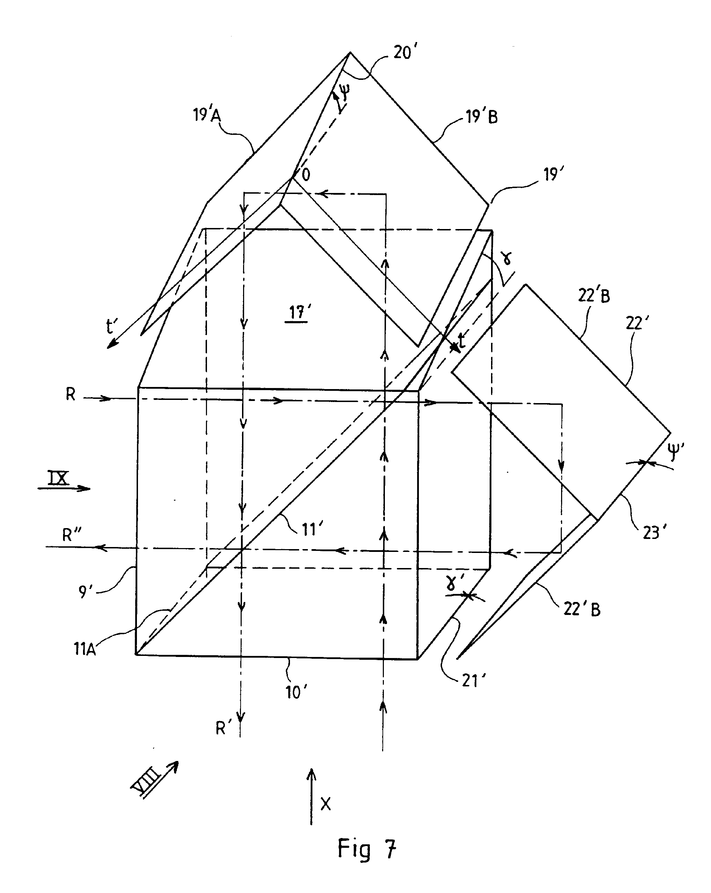

Les figures 6 à 10 représentent une variante de réalisation du dispositif interférométrique des figures 1 à 4 ; la figure 6 est une variante de la figure 1 dans laquelle le dispositif 5 a été remplacé par un dispositif 5' associé à une direction de défilement D' perpendiculaire à D.

Ce dispositif 5' comporte de même deux prismes 9' et 10' accolés par des surfaces traitées de façon appropriée et formant conjointement une lame semi-transparente 11'. Les blocs prismes 9' et 10' comportent des faces parallèles d'entrée/sortie 25' et 26' bordées par une arête 11'A et en regard de la face 21' parallèle à la face 25' est disposée une surface réfléchissante en toit 22' à 90° dont le plan bissecteur intercepte la face 21 à angle droit selon une ligne médiane de celui-ci. De même le prisme 9' comporte une face 17' opposée à la face d'entrée/sortie 26', en regard de laquelle est disposée une surface réfléchissante en toit 19'.

Toutefois, à la différence du dispositif 5, la surface 17' est plane, présentant par rapport à la face 26 une inclinaison γ parallèlement aux faces 25' et 21'. Le miroir en toit 19' comporte quant à lui des pans réfléchissants 19'A et 19'B qui définissent une arête 20' faisant un angle ψ par rapport à la face 26'. L'angle entre ces pans réfléchissants, mesuré dans un plan Ott' perpendiculaire aux faces 25' et 26', est égal à 90°. En variante, l'angle d'ouverture de ces pans est de 90°.

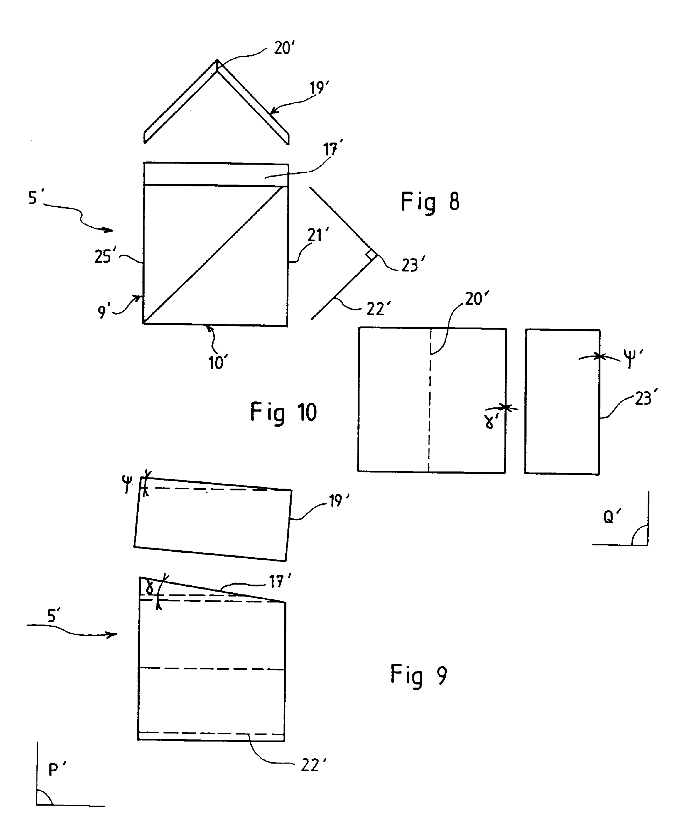

On peut ici aussi, pour la face 21' et la surface réfléchissante 22', définir (voir figure 10) des angles γ' et ψ' qui sont ici tous deux nuls.

Ainsi, la différence de marche pour des zones élémentaires de sol voisines est provoquée par les miroirs en toit 19' et 22', tandis que la surface 17' assure une compensation de champ.

Si $\underline{n}$ est l'indice de réfraction du matériau constitutif des éléments transparents du dispositif 5', les écarts angulaires (γ-γ') et (ψ-ψ') sont reliés par la relation :

$$(\psi - \psi') = \frac{n-1}{n}(\gamma - \gamma')$$

En pratique γ est choisi à une valeur comprise entre $10^{-2}$ et $10^{-4}$rd, selon les applications visées. Pour la lumière visible, l'angle γ est par exemple égal à $1,5.10^{-3}$rd.

On appréciera que dans les dispositifs 5' :
- les faisceaux complémentaires de sortie R' et R" sont tous deux utilisables ;
- les réflexions parasites sont émises sur les voies d'entrée du dispositif interférométrique ;
- le plan de focalisation de l'image formée par l'objectif d'entrée n'est pas situé dans le plan d'un miroir matérialisé.

Il va de soi que la description qui précède n'a été proposée qu'à titre d'exemple non limitatif et que de nombreuses variantes peuvent être proposées par l'homme de l'art sans sortir du cadre de l'invention.

On appréciera que, si l'on définit pour chacune des faces d'entrée/sortie des plans de référence perpendiculaires à cette face d'entrée/sortie et parallèle à la direction de référence (plan P-Q de la figure 3 pour le dispositif 5, et plans P' et Q' des figures 9 et 10, pour le dispositif 5') on peut écrire, pour les deux exemples de réalisation des figures 1 à 10, qu'au moins une surface inclinée de séparation dioptrique est prévue entre l'une des faces d'entrée/sortie et la surface réfléchissante associée, faisant dans le plan de référence associé, un angle de dioptre α ou γ non nul par rapport à cette face d'entrée/sortie, et que les surfaces réfléchissantes en toit présentent dans ces plans de référence, par rapport aux faces d'entrée/sortie associées, des angles d'inclinaison β et β' ou ψ et ψ' dont l'écart est non nul. Plus précisément, dans chacun de ces cas, entre chacune des faces d'entrée/sortie et la surface réfléchissante associée, est prévue une surface de séparation dioptrique ; l'écart d'inclinaison β-β' ou ψ - ψ' est dans chaque cas, dans un rapport (n-1)/n par rapport à l'écart des angles de dioptre (α-α') ou (γ-γ').

## Revendications

1. Dispositif interférométrique (5, 5') pour imagerie par spectrométrie par transformée de FOURIER multiplexe, destiné à être mis en défilement relatif par rapport à une zone-objet (2) selon une direction de défilement (D, D') constituant pour ce dispositif interférométrique une direction de référence, comportant un bloc prismatique en matériau transparent présentant de première (25, 25') et seconde (26, 26') faces d'entrée/sortie perpendiculaires l'une à l'autre et se rejoignant en une arête du bloc (11A), une lame semi-transparente (11, 11") dans ce bloc, disposée à 45° par rapport à ces première et seconde faces d'entrée/sortie et passant par ladite arête du bloc, et de première et seconde surfaces réfléchissantes (22, 19) disposées respectivement en regard de ces première et seconde faces d'entrée/sortie au travers de la lame semi transparente, caractérisé en ce que :
   - à chaque face d'entrée/sortie (25, 25', 26, 26') est associé un plan de référence (P-Q ; P', Q') perpendiculaire à cette face d'entrée/sortie et parallèle à ladite direction de référence (D, D'),
   - au moins une surface inclinée de séparation dioptrique (17, 17') est prévue entre l'une des faces d'entrée/sortie et la surface réfléchissante associée, faisant dans le plan de référence associé un angle de dioptre non nul (α, γ) par rapport à cette face d'entrée/sortie,
   - les première et seconde surfaces réfléchissantes (22, 19 ; 22' 19') sont de configurations et d'orientations fixes par rapport au bloc et ont chacune la forme d'un toit dont la concavité est en regard de la face d'entrée/sortie associée et qui admet un plan bissecteur parallèle à ladite arête du bloc et perpendiculaire à ladite face d'entrée/sortie associée, ces surfaces en toit présentant dans les plans de référence, par rapport aux faces d'entrée/sortie associées, des angles d'inclinaison (β, β'; ψ , ψ') dont l'écart est non nul.

2. Dispositif selon la revendication 1, caractérisé en ce qu'il présente entre chacune des faces d'entrée/sortie et la surface réfléchissante associée, des surfaces de séparation dioptrique (17, 17' ; 21, 21') dont les angles de dioptre (α, α' ; γ, γ') mesurés dans les plans de références, déterminent un écart angulaire de dioptre tel que l'écart d'inclinaison soit par rapport à cet écart angulaire de dioptre dans un rapport prédéterminé défini en fonction des indices de réfraction des milieux séparés par ces surfaces de séparation dioptrique.

3. Dispositif selon la revendication 1, caractérisé en ce que cet écart d'inclinaison est, par rapport à cet angle de dioptre, dans un rapport prédéterminé défini en fonction des indices de réfraction des milieux séparés par ces surfaces de séparation dioptrique.

4. Dispositif selon la revendication 2 ou la revendication 3, caractérisé en ce que n étant l'indice de réfraction du matériau constitutif du bloc, le rapport prédéterminé vaut (n-1)/n.

5. Dispositif selon l'une quelconque des revendications 1, 2 ou 4, caractérisé en ce qu'il comporte entre l'autre des faces d'entrée/sortie, et la surface réfléchissante associée, une surface plane de séparation dioptrique parallèle à cette face d'entrée/sortie, et l'une des surfaces réfléchissantes a une arête de toit parallèle à ladite arête du bloc et a une ouverture de 90°.

6. Dispositif selon la revendication 5, caractérisé en ce que cette surface parallèle de séparation et cette surface réfléchissante correspondent à une même face d'entrée/sortie.

7. Dispositif selon la revendication 5 ou la revendication 6, caractérisé en ce que, ladite direction de référence étant perpendiculaire à ladite arête du bloc, ladite surface inclinée de séparation dioptrique (17) est un dièdre formé de deux surfaces planes inclinées dudit angle (α) de dioptre par rapport à la face d'entrée/sortie associée (26) et dont l'intersection constitue une arête de dièdre (18) parallèle à ladite arête de bloc (11A) et la surface réfléchissante en toit associée a une arête de toit (20) parallèle auxdites arêtes de dièdre (18) et de bloc (11A) et a comme angle d'ouverture ledit angle d'inclinaison (β).

8. Dispositif selon la revendication 7, caractérisé en ce que l'une au moins des surfaces réfléchissantes (19) est réglable en position selon une direction transversale de réglage (V, V') perpendiculaire à ladite arête du bloc.

9. Dispositif selon la revendication 1, caractérisé en ce que ladite direction de référence étant parallèle à l'arête de bloc, ladite surface inclinée de séparation dioptrique (17') est plane et est inclinée dudit angle de dioptre (γ) par rapport à l'arête de bloc (11A) et en ce que l'arête de dièdre (20') de la surface réfléchissante associée est inclinée dudit angle d'inclinaison (ψ) par rapport à l'arête du bloc.

10. Système d'imagerie par spectrométrie par transformée de FOURIER multiplexe destiné à être déplacé selon une direction de défilement (D, D') par rapport à une zone-objet (2) comportant un dispositif interférométrique (5, 5') selon l'une quelconque des revendications 1 à 9, une optique d'entrée (7) en regard de l'une des faces d'entrée/sortie pour la réception de faisceaux émis par ladite zone-objet, un dispositif de détection (4) en regard de l'autre des faces d'entrée/sortie, formé d'un réseau à deux dimensions de détecteurs élémentaires (5) et une unité de traitement (3) munie d'une horloge (3A) et adaptée à relever les valeurs successives des signaux reçus par les détecteurs élémentaires pour en déduire une image spectrale de ladite zone-objet.

11. Système selon la revendication 10, caractérisé en ce qu'il comporte un dispositif de détection (4, 4') en regard de chacune des faces d'entrée/sortie (25, 25'), chacun de ces dispositifs de détection (4, 4') étant connecté à l'unité de traitement (3).

**Patentansprüche**

1. Interferometrische Vorrichtung (5, 5') zur Bilderzeugung durch Fourier-Transformation-Multiplexspektrometrie, die dazu bestimmt ist, bezüglich einer Objektzone (2) in einer Vorbewegungsrichtung (D, D') vorbewegt zu werden, die für diese interferometrische Vorrichtung eine Bezugsrichtung bildet, bestehend aus einem prismenförmigen Block aus transparentem Werkstoff, der eine erste (25, 25') und zweite (26, 26') Eingangs/Ausgangs-Fläche, die zueinander senkrecht sind und sich in einer Kante (11A) des Blocks treffen, einer halbtransparenten Platte (11, 11") in diesem Block, die bezüglich der ersten und der zweiten Eingangs/Ausgangs-Fläche in 45° angeordnet ist und durch diese Kante des Blocks läuft, und eine erste und eine zweite reflektierende Fläche (22, 19), bildet, die über die halbtransparente Platte gegenüber dieser ersten bzw. dieser zweiten Eingangs/Ausgangs-Fläche angeordnet sind, dadurch gekennzeichnet, daß
  - jeder Eingangs/Ausgangs-Fläche (25, 25', 26, 26') eine Bezugsebene (P-Q; P', Q') zugeordnet ist, die zu dieser Eingangs/Ausgangs-Fläche senkrecht und zu der Bezugsrichtung (D, D') parallel ist,
  - wenigstens eine geneigte dioptrische Trennfläche (17, 17') zwischen einer der Eingangs/Ausgangs-Flächen und der zugeordneten reflektierenden Fläche vorgesehen ist, die in der zugeordneten Bezugsebene bezüglich dieser Eingangs/Ausgangs-Fläche einen Diopterwinkel (α,γ) von nicht Null bildet,
  - die erste und die zweite reflektierende Fläche (22, 19; 22', 19') bezüglich des Blocks feststehende Konfigurationen und Ausrichtungen haben und jeweils die Form eines Dachs haben, dessen Konkavität der zugeordneten Eingangs/Ausgangs-Fläche gegenübersteht und eine zu dieser Kante des Blocks parallele und zur zugeordneten Eingangs/Ausgangs-Fläche senkrechte Halbierungsebene besitzt, wobei diese dachförmigen Flächen in den Bezugsebenen bezüglich den zugeordneten Eingangs/Ausgangs-Flächen Neigungswinkel (β,β';ψ,ψ') aufweisen, deren Differenz nicht Null ist.

2. Vorrichtung nach Anspruch 1, dadurch gekennzeichnet, daß sie zwischen jeder der Eingangs/Ausgangs-Flächen und der zugeordneten reflektierenden Fläche dioptrische Trennflächen (17, 17'; 21, 21') besitzt, deren in den Bezugsebenen gemessene Diopterwinkel (α,α';γ,γ') eine solche Diopterwinkeldifferenz festlegen, daß die Neigungsdifferenz zu dieser Diopterwinkeldifferenz in einem vorbestimmten Verhältnis steht, das in Abhängigkeit von den Brechzahlen der durch diese dioptrischen Trennflächen getrennten Medien definiert ist.

3. Vorrichtung nach Anspruch 1, dadurch gekennzeichnet, daß diese Neigungsdifferenz zu diesem Diopterwinkel in einem vorbestimmten Verhältnis steht, das in Abhängigkeit von den Brechzahlen der durch diese dioptrischen Trennflächen getrennten Medien definiert ist.

4. Vorrichtung nach Anspruch 2 oder 3, dadurch gekennzeichnet, daß, wenn n die Brechzahl des den Block bildenden Werkstoffs ist, das vorbestimmte Verhältnis (n-1)/n beträgt.

5. Vorrichtung nach einem der Ansprüche 1, 2 oder 4, dadurch gekennzeichnet, daß es zwischen der anderen der Eingangs/Ausgangs-Flächen und der zugeordneten reflektierenden Fläche eine ebene dioptrische Trennfläche, die zu dieser Eingangs/Ausgangs-Fläche parallel ist, umfaßt und daß eine der reflektierenden Flächen eine zu dieser Kante des Blocks parallele Dachkante und eine Öffnung von 90° hat.

6. Vorrichtung nach Anspruch 5, dadurch gekennzeichnet, daß diese parallele Trennfläche und diese reflektierende Fläche einer gemeinsamen Eingangs/Ausgangs-Fläche entsprechen.

7. Vorrichtung nach Anspruch 5 oder Anspruch 6, dadurch gekennzeichnet, daß, wenn die Bezugsrichtung zur Kante des Blocks senkrecht ist, diese geneigte dioptrische Trennfläche (17) ein Dieder ist, der von zwei ebenen Flächen gebildet ist, die in diesem Diopterwinkel ($\alpha$) bezüglich der zugeordneten Eingangs/Ausgangs-Fläche (26) geneigt sind und deren Schnittstelle eine zu dieser Blockkante (11A) parallele Diederkante (18) bildet, und daß die zugeordnete dachförmige reflektierende Fläche eine zu der Diederkante (18) und zu der Blockkante (11A) parallele Dachkante (20) und als Öffnungswinkel diesen Neigungswinkel ($\alpha$) hat.

8. Vorrichtung nach Anspruch 7, dadurch gekennzeichnet, daß wenigstens eine der reflektierenden Flächen (19) bezüglich der Stellung in einer Verstellungs-Querrichtung (V, V'), die zu dieser Kante des Blocks senkrecht ist, verstellbar ist.

9. Vorrichtung nach Anspruch 1, dadurch gekennzeichnet, daß, wenn diese Bezugsrichtung zur Blockkante parallel ist, die geneigte dioptrische Trennfläche (17') eben und in diesem Diopterwinkel ($\gamma$) bezüglich der Blockkante (11A) geneigt ist und daß die Diederkante (20') der zugeordneten reflektierenden Fläche in diesem Neigungswinkel ($\psi$) bezüglich der Kante des Blocks geneigt ist.

10. System zur Bilderzeugung durch Fourier-Transformation-Multiplexspektrometrie, das dazu bestimmt ist, in einer Vorbewegungsrichtung (D, D') bezüglich einer Objektzone (2) vorbewegt zu werden, bestehend aus einer interferometrischen Vorrichtung (5, 5') gemäß einem der Ansprüche 1 bis 9, einer Eingangsoptik gegenüber der einen der Eingangs/Ausgangs-Flächen zur Aufnahme von von der Objektzone gesendeten Strahlenbündeln, einer Erfassungsvorrichtung (4) gegenüber der anderen der Eingangs/Ausgangs-Flächen, die aus einem zweidimensionalen Netz von Einzelfühlern (5) besteht, und einer Verarbeitungseinheit (3), die mit einem Zeitgeber (3A) ausgerüstet ist und die aufeinanderfolgenden Werte der von den Einzelfühlern empfangenen Signale aufnehmen kann, um daraus ein Spektralbild der Objektzone abzuleiten.

11. System nach Anspruch 10, dadurch gekennzeichnet, daß es eine Erfassungsvorrichtung (4, 4') gegenüber jeder der Eingangs/Ausgangs-Flächen (25, 25') umfaßt, wobei jede dieser Erfassungsvorrichtungen (4, 4') mit der Verarbeitungseinheit (3) verbunden ist.

**Claims**

1. An interferometry device (5, 5') for multiplex FOURIER transform spectro-imaging, adapted to be scanned relative to an object area (2) in a scanning direction (D, D') constituting a reference direction for the said interferometry device, comprising a prismatic block of transparent material having first (25, 25') and second (26, 26') entry/exit faces at right angles to each other and meeting at one edge of the block (11A), a semi-transparent blade (11, 11") in the said block, at 45° to the said first and second entry/exit faces and passing through the said edge of the brock, and first and second reflective surfaces (22, 19) in facing relationship with the said first and second entry/exit faces respectively through the semi-transparent blade, characterised in that:
   - a reference plane (P-Q; P', Q'), perpendicular to the said entry/exit face and parallel to the said reference direction (D, D'), is associated with each entry/exit face (25, 25', 26, 26'),
   - at least one inclined dioptric separation surface (17, 17') is provided between one of the entry/exit faces and the associated reflective surface, defining a non-null dioptric angle ($\alpha,\gamma$) with respect to the said entry/exit face in the associated reference plane,
   - the first and second reflective surfaces (22, 19; 22', 19') have fixed configurations and orientations relative to the block, and each has the shape of a roof, the concave side of which is in facing relationship with the associated entry/exit face and which defines a bisecting plane parallel to the said edge of the block and perpendicular to the associated said entry/exit face, the said roof-shaped surfaces having, in the reference planes, angles of inclination ($\beta$, $\beta'$; $\psi$, $\psi'$)

with respect to the associated entry/exit faces, with a non-null difference between them.

2. A device according to Claim 1, characterised in that it has, between each of the entry/exit faces and the associated reflective surface, dioptric separation surfaces (17, 17'; 21, 21') of which the dioptric angles ($\alpha$, $\alpha'$; $\gamma$, $\gamma'$), measured in the reference planes, determine a difference in dioptric angle such that the difference in inclination is in a predetermined ratio to the said difference in dioptric angle, this ratio being defined by the refractive indices of the media separated by the said dioptric separation surfaces.

3. A device according to Claim 1, characterised in that the said difference in inclination is in a predetermined ratio to the said dioptric angle, this ratio being defined as a function of the refractive indices of the media separated by the said dioptric separation surfaces.

4. A device according to Claim 2 or Claim 3, characterised in that the value of the predetermined ratio is (n - 1)/n, where $\underline{n}$ is the refractive index of the material of the block.

5. A device according to any one of Claims 1, 2 and 4, characterised in that it comprises, between the other one of the entry/exit faces and the associated reflective surface, a plane dioptric separation surface parallel to the said entry/exit face, and one of said reflective surfaces has an edge of its roof shape parallel to the said edge of the block, and has an aperture of 90°.

6. A device according to Claim 5, characterised in that the said parallel separation surface and the said reflective surface correspond to a common entry/exit face.

7. A device according to Claim 5 or Claim 6, characterised in that, the said reference direction being perpendicular to the said edge of the block, the said inclined dioptric separation surface (17) is a dihedral defined by two plane surfaces inclined to the associated entry/exit face (26) by the said dioptric angle ($\alpha$), and their intersection constitutes a dihedral edge (18) parallel to the said edge (11A) of the block, while the associated roof-shaped reflective surface has an edge (20) of the roof shape parallel to the said dihedral edge (18) and to the said edge (11A) of the block, and has the said angle of inclination ($\beta$) as the aperture angle.

8. A device according to Claim 7, characterised in that at least one of the reflective surfaces (19) is adjustable in position in a transverse adjustment direction (V, V') perpendicular to the said edge of the block.

9. A device according to Claim 1, characterised in that, the said reference direction being parallel to the edge of the block, the said inclined dioptric separation surface (17') is plane and is inclined to the edge (11A) of the block by the said dioptric angle ($\gamma$), and in that the dihedral edge (20') of the associated reflective surface is inclined to the edge of the block by the said angle of inclination ($\psi$).

10. A multiplex FOURIER transform spectro-imaging system adapted to be moved in a scanning direction (D, D') relative to an object area (2) comprising an interferometry device (5, 5') according to any one of Claims 1 to 9, an optical input means (7) in facing relationship with one of the entry/exit faces for receiving beams emitted by the said object area, a detecting device (4) in facing relationship with the other entry/exit face and comprising a two-dimensional array of elementary detectors (5), and a processing unit (3) including a timer (3A) and adapted to take successive values of the signals received by the elementary detectors, so as to deduce therefrom a spectral image of the said object area.

11. A system according to Claim 10, characterised in that it comprises a detecting device (4, 4') in facing relationship with each of the entry/exit faces (25, 25'), each of the said detecting devices (4, 4') being connected to the processing unit (3).

Fig.1

Fig 2

Fig 3

Fig 4

Fig 5

Fig 6

Fig 7

20'

19'

17'

**Fig 8**

5'

25'

21'

9'

23'

22'

20'

10'

**Fig 10**

Ψ'

γ'

23'

Q'

Ψ

19'

17'

δ

5'

22'

**Fig 9**

P'